# EUROPEAN PATENT APPLICATION

(11) **EP 2 444 927 A1**
(43) Date of publication of application: **25.04.2012**
(21) Application number: 10186405.6
(22) Date of filing: 04.10.2010
(51) Int. Cl.: G06Q 30/00, G06Q 10/00

(54) **Method, system and mobile electronic device for purchasing media**

(71) Applicant: RESEARCH IN MOTION LIMITED, Waterloo, Ontario N2L 3W8 (CA)
(72) Inventor: Arastafar, Martin, Waterloo Ontario N2L 3L3 (CA)
(74) Representative: MERH-IP Matias Erny Reichl Hoffmann

(57) **Abstract**

According to embodiments described in the specification, a method, system and mobile electronic device for purchasing media are provided. The method comprises receiving metadata at a communications interface of a mobile electronic device, the metadata comprising an identifier for media being played by a second device; determining whether input data has been received at the mobile electronic device, the input data representing a purchase command; and when the determination is affirmative, transmitting a purchase request from the mobile electronic device for purchasing the media, the purchase request including the identifier.

## Description

### FIELD

The present disclosure relates generally to broadcast media, and specifically to a method, system and mobile electronic device for purchasing media.

### BACKGROUND

As the numbers of mobile electronic devices such as cellular phones and smart phones increase, the capabilities of both the devices and the associated networks within which these devices operate continue to grow. As a result, ever greater functionality is made available to these devices. Among the functions available to many such devices is the ability to purchase media (e.g. ring tones, music and the like) from online stores. The integration of these purchasing capabilities with media-playing devices such as radio tuners, however, remains cumbersome and inefficient.

### GENERAL

According to an aspect of the present disclosure, a method of purchasing media is provided, comprising receiving metadata at a communications interface of a mobile electronic device, the metadata comprising an identifier for media being played by a second device; determining whether input data has been received at the mobile electronic device, the input data representing a purchase command; and when the determination is affirmative, transmitting a purchase request from the mobile electronic device for purchasing the media, the purchase request including the identifier.

According to another aspect of the present disclosure, a mobile electronic device is provided, comprising a memory; a communications interface for receiving metadata, the metadata comprising an identifier for media being played by a second device; and a processor configured to determine whether input data has been received at the mobile electronic device, the input data representing a purchase command; and, when the determination is affirmative, to transmit, via the communications interface, a purchase request for purchasing the media, the purchase request including the identifier.

According to a further aspect of the present disclosure, a non-transitory computer readable storage medium having computer-readable instructions embodied therein for execution by a processor, the computer-readable instructions implementing a method, the method comprising: receiving metadata at a communications interface of a mobile electronic device, the metadata comprising an identifier for media being played by a second device; determining whether input data has been received at the mobile electronic device, the input data representing a purchase command; and when the determination is affirmative, transmitting a purchase request from the mobile electronic device for purchasing the media, the purchase request including the identifier.

### BRIEF DESCRIPTIONS OF THE DRAWINGS

Embodiments are described with reference to the following figures, in which:

Figure 1 depicts a system for purchasing media, according to a non-limiting embodiment;

Figure 2 depicts a schematic diagram of the mobile device of Figure 1, according to a non-limiting embodiment;

Figure 3 depicts a schematic diagram of the radio of Figure 1, according to a non-limiting embodiment;

Figure 4 depicts a method of purchasing media, according to a non-limiting embodiment; and

Figure 5 depicts a schematic representation of a display of the radio of Figure 1, according to a non-limiting embodiment; and

Figure 6 depicts a system for purchasing media, according to another non-limiting embodiment.

### DETAILED DESCRIPTION OF THE EMBODIMENTS

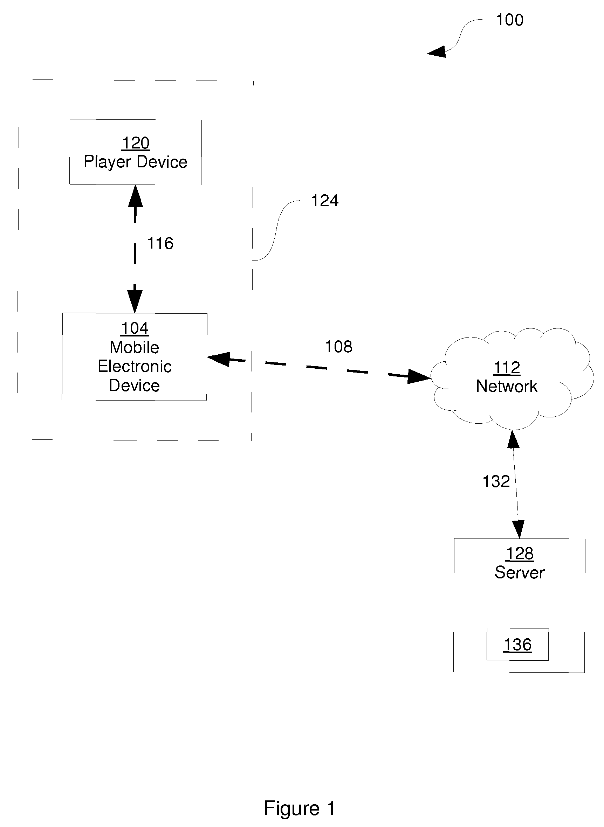

Figure 1 depicts a system 100 for managing media. System 100 includes a mobile electronic device 104 which, in the presently described example embodiment, is based on the operating environment and functionality of a hand-held wireless communication device. It will be understood, however, that the mobile electronic device 104 is not limited to a hand-held wireless communication device. Other mobile electronic devices are also contemplated, such as cellular telephones, smart telephones, Personal Digital Assistants ("PDAs"), media or MP3 players, laptop computers, and the like.

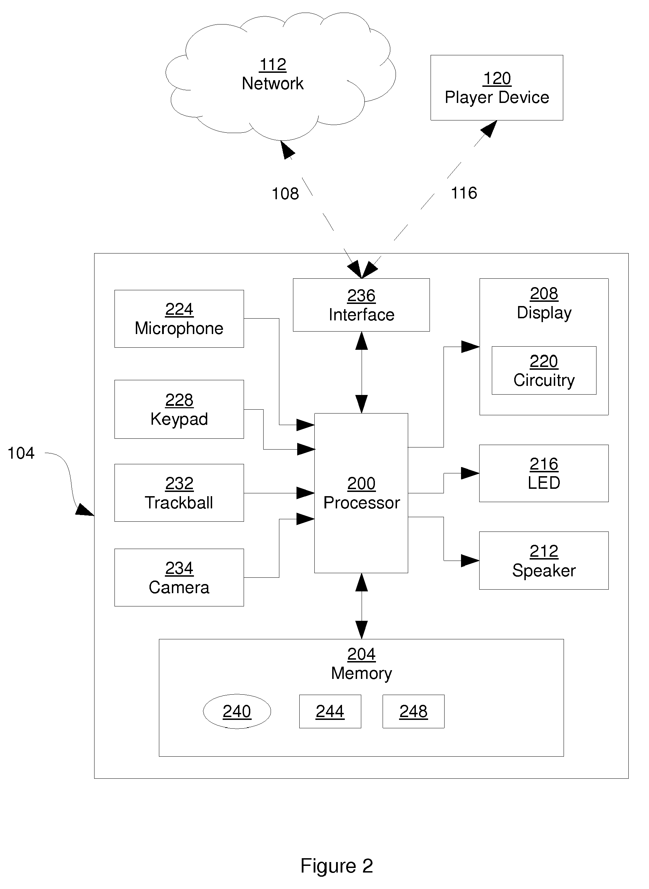

Referring to Figure 2, mobile electronic device 104 includes a processor 200 interconnected with a computer readable storage (i.e. non-transitory) medium such as memory 204. Memory 204 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory.

Mobile electronic device 104 further includes one or more output devices interconnected with processor 200, such as a display 208. It will be appreciated that other output devices are also contemplated. For example, mobile electronic device 104 can also include a speaker 212, a light-emitting indicator such as a Light Emitting Diode (LED) 216, and the like. Display 208 includes display circuitry 220 controllable by processor 200 for generating representations of data and/or applications maintained in memory 204. Display 208 includes a flat panel display (e.g. Liquid Crystal Display (LCD), plasma display, Organic Light Emitting Diode (OLED) display). Circuitry 220 can thus include any suitable combination of display buffers, transistors, LCD cells, plasma cells, phosphors, and the like. It will also now be apparent that a touch screen input device can be integrated with display 208.

Mobile electronic device 104 additionally includes one or more input apparatuses interconnected with processor 200, including without limitation a microphone 224, a keypad 228 (which, in some example embodiments, includes a keyboard such as a QWERTY keyboard or reduced QWERTY keyboard, and a plurality of additional function keys), an input navigation device such as a trackball 232 and a camera 234. It will now be apparent that in some example embodiments, other combinations of input apparatuses can be provided. In some non-limiting embodiments, for example, trackball 232 can be replaced with a touchpad (not shown). In further non-limiting embodiments, one or both of keypad 228 and trackball 232 can be omitted, and a touch screen input device (not shown) can be integrated with display 208. In still other non-limiting embodiments, the touch screen input device can be provided in addition to keypad 228 and trackball 232. Further variations will occur to those skilled in the art. In general, input apparatuses of mobile electronic device 104 are configured to provide input data to processor 200.

Mobile electronic device 104 also includes a communications interface 236 interconnected with processor 200. As seen in Figure 1, communications interface 236 allows mobile electronic device 104 to communicate with other devices via communications links. One such link 108 is shown in Figure 1 between mobile electronic device 104 and a network 112. Network 112 can include any suitable combination of wired and/or wireless networks, including but not limited to a Wide Area Network ("WAN") such as the Internet, a Local Area Network ("LAN"), cell phone networks, WiFi networks, WiMax networks, and the like. Link 108 is compatible with network 112. In particular, link 108 can be a wireless link based on Global System for Mobile communications ("GSM"), General Packet Radio Service ("GPRS"), Enhanced Data rates for GSM Evolution ("EDGE"), and the third-generation mobile communication system (3G), Institute of Electrical and Electronic Engineers ("IEEE") 802.11 (WiFi), or other wireless protocols. It will be understood that link 108 can also include any base stations and backhaul links necessary to connect mobile electronic device 104 to network 112.

Another example link 116 is shown in Figure 1. In some example embodiments, link 116 is a short-range wireless link based on Bluetooth™. In other non-limiting embodiments, link 116 can also be a wired link, such as a Universal Serial Bus (USB) link. It will be understood that communications interface 236 can therefore be selected for compatibility with links 108 and 116 as well as with network 112.

The various components of mobile electronic device 104 are interconnected, for example via a communication bus (not shown). Mobile electronic device 104 can be powered by a battery (not shown), though it will be understood that mobile electronic device 104 can also be supplied with electricity by a wired connection to a wall outlet or other power source, for example when docked.

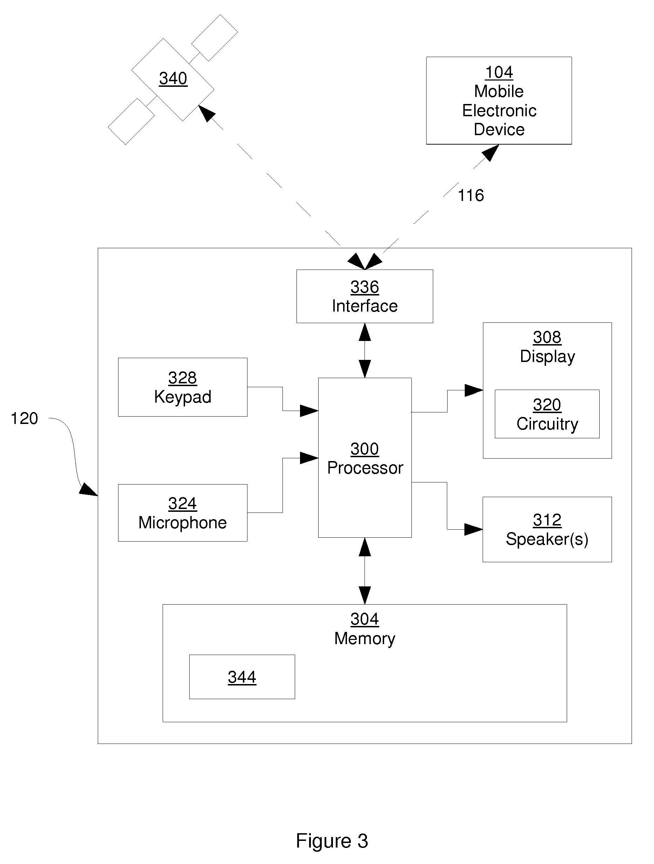

System 100 also includes a player device 120, such as a radio tuner, configured for receiving and playing media. Player device 120 can be, for example, a satellite radio tuner within a vehicle 124. In other non-limiting embodiments, player device 120 can be, for example, a digital cable receiver connected to a network via a wired link. Referring now to Figure 3, certain internal components of player device 120 are shown.

Player device 120 includes a processor 300 interconnected with a computer readable storage (i.e. non-transitory) medium such as memory 304. Memory 304 can be any suitable combination of volatile (e.g. Random Access Memory ("RAM")) and non-volatile (e.g. read only memory ("ROM"), Electrically Erasable Programmable Read Only Memory ("EEPROM"), flash memory, magnetic computer storage device, or optical disc) memory.

Player device 120 also includes one or more output devices interconnected with processor 300, such as a display 308 and one or more speakers 312. In some example embodiments, speakers 312 are housed separately from player device 120. For example, in some embodiments, speakers 312 can be embedded within vehicle 124. Display 308 includes display circuitry 320 controllable by processor 300 for generating representations of data and/or applications maintained in memory 304. Display 308 includes a flat panel display (e.g. Liquid Crystal Display (LCD), plasma display, Organic Light Emitting Diode (OLED) display). Circuitry 320 can thus include any suitable combination of display buffers, transistors, LCD cells, plasma cells, phosphors, and the like. It will also now be apparent that a touch screen input device can be integrated with display 308.

Player device 120 can also include one or more input apparatuses interconnected with processor 300, including without limitation a microphone 324 and a keypad 328. In some example embodiments, other combinations of input apparatuses can be provided, including touch pads, touch screens integrated with display 308, and the like. Moreover, either or both of microphone 324 and keypad 328 can be omitted in some example embodiments. In general, input apparatuses of player device 120 are configured to provide input data to processor 300.

Player device 120 also includes a communications interface 336 interconnected with processor 300. Communications interface 336 allows player device 120 to communicate with other devices via communications links. In some embodiments, player device 120 can communicate with mobile electronic device 104 via link 116 (which, as mentioned above, can be a short-range wireless link based on Bluetooth™ or a wired link, such as a USB link). Player device 120 can additionally communicate with a media broadcast source, such as a radio satellite 340 in the presently described example embodiment. It will be appreciated that other media broadcast sources than radio satellite 340 are also contemplated. For example, in some example embodiments player device 120 can communicate with terrestrial media broadcast sources instead of, or in addition to, radio satellite 340.

Player device 120 can thus be configured to receive media from one or more remote broadcasting sources and to play the received media within vehicle 124, via output devices such as speakers 312, display 308 or any suitable combination thereof. In some example embodiments, the media received for playing can be maintained temporarily in memory 304 at a media cache 344 or other temporary memory placeholder. Player device 120 also receives, from radio satellite 340, metadata associated with the media. The received metadata can also be maintained temporarily in media cache 344. In the presently described example embodiment, the media and associated metadata are maintained in media cache 344 until playback of the media by player device 120 is complete. Once playback of the media is complete, the media and associated metadata are deleted from media cache 344 and can be replaced by different media and associated metadata received from radio satellite 340, which is in turn temporarily stored in media cache 344 for playback and eventual deletion. In other words, at any given time media cache 344 contains "current" media and metadata - that is, the media currently being received or played, or both, as well as the metadata associated with that media. The metadata includes an identification of the media with which it is associated. The metadata can also include various characterizing information for the media in media cache 344. In some example embodiments, metadata includes, without limitation, song name, artist name, album name, or other identifiers. Metadata can also include a purchase price for the media.

Mobile electronic device 104 can be configured for communications with player device 120 via link 116 when mobile electronic device 104 is itself within vehicle 124. It will now be appreciated, however, that player device 120 and mobile electronic device 104 need not be within vehicle 124, and that this non-limiting arrangement is presented for illustrative purposes.

Referring back to Figure 1, system 100 further includes a server 128 connected to network 112 via a link 132. Link 132 can be, in a non-limiting embodiment, a wired link. Server 128 can be a media repository operated by an entity which sells or otherwise provides media to devices such as mobile electronic device 104. Server 128 can thus maintain a store 136 of media files, at least some of which can be purchased by mobile electronic device 104. As will now be apparent to those skilled in the art, server 128 can be based on any known server environment, including an enclosure housing one or more processors interconnected with a memory and any necessary communications interfaces. Mobile electronic device 104 can be configured to establish communication with server 128 in order to purchase and retrieve media from server 128 via network 112, as will be discussed below in further detail. To that end, referring briefly to Figure 2, mobile electronic device 104 includes a media purchase application 240 maintained in memory 204. Media purchase application 240 (hereinafter referred to as "media application 240" or "application 240") includes computer-readable instructions executable by processor 200. Processor 200, via execution of the instructions of application 240, can be configured to carry out various functions, as discussed below.

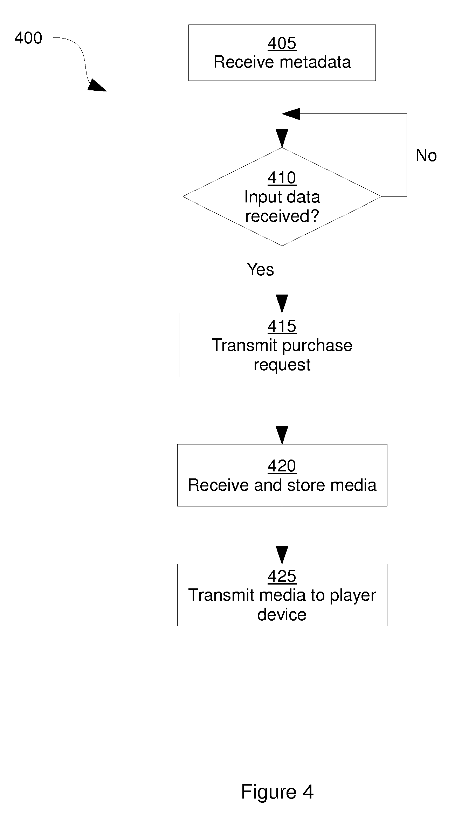

Referring now to Figure 4, a method 400 for purchasing media is shown. Method 400 will be discussed in connection with its performance on system 100, though it will be appreciated that method 400 can also be performed on other systems. Beginning at block 405, processor 200 of mobile electronic device 104 can be configured to receive current metadata from player device 120 via communications interface 236.

It is contemplated that various mechanisms can be used for the performance of block 405 as described below. In some example embodiments, processor 300 of player device 120 is configured to automatically transmit the current metadata stored in media cache 344 over link 116. Thus, having received the current metadata from radio satellite 340, processor 300 can be configured to forward that metadata directly to mobile electronic device 104. Processor 300 can be configured to effect the automatic forwarding at predetermined time intervals. In other example embodiments, processor 300 can be configured to effect the automatic forwarding whenever the current metadata changes (i.e. is overwritten by different metadata associated with the next media file to be played).

In other example embodiments, mobile electronic device 104 is configured to transmit periodic metadata requests over link 116. Such requests can be made automatically (that is, without the receipt of input data from any of the input apparatuses of mobile electronic device 104). The time period between each request can be predetermined, and configurable by receipt of input data from one or more of mobile electronic device 104's input apparatuses. In still other example embodiments, the time period can be determined by processor 200 based on the current metadata. For example, the current metadata can include the duration of a song with which it is associated. Processor 200 can be configured to determine when the current metadata will expire (i.e. after the specified duration has elapsed, indicating that playback of the song has completed and that the current media and metadata within media cache 344 has changed or will soon change) and to transmit a metadata request to player device 120 upon such expiry.

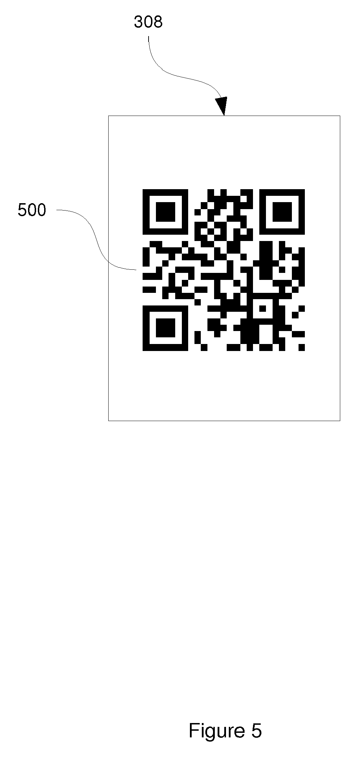

In further example embodiments, the performance of block 405 can include the capture of current metadata from display 308 of player device 120. Referring now to Figure 5, display 308 is depicted. Processor 300 can be configured to control circuitry 320 to generate a machine-readable representation 500 of the current metadata on display 308. Machine-readable representation 500 can be, for example, a two-dimensional barcode or "QR code" as shown in Figure 5. Machine-readable representation 500 can be captured by camera 234 and decoded by processor 200 to re-create the current metadata in mobile electronic device 104. In other example embodiments, the mobile electronic device 104 has a barcode reader (not shown) to capture and interpret the metadata information contained in the machine-readable representation 500.

Having received current metadata, processor 200 completes the performance of block 405 by storing a copy of the current metadata in memory 204. Referring briefly to Figure 1, current metadata 244, being the copy of current metadata stored in media cache 344, can be seen maintained in memory 204. In some example embodiments, current metadata 244 is overwritten by updated current metadata received from player device 120. In other example embodiments, a configurable number of past copies of metadata can be stored in memory 204.

Referring back to Figure 4, method 400 proceeds with the performance of block 410. At block 410, processor 200 can be configured to determine whether input data representing a purchase command has been received at any of the input apparatuses of mobile electronic device 104. Input data representing a purchase command can be generated, for example, by microphone 224 upon detection of the spoken word, "purchase". In other example embodiments, the input data can be generated by keypad 228 upon detection of a depression of a particular key. In still other example embodiments, the input data can be generated by trackball 232 upon detection of depression of the trackball following highlighting of a "purchase" option (not shown) rendered on display 208. In still further example embodiments, the capture of representation 500 as described above by camera 234 can comprise a purchase command.

Following a negative determination at block 410 - indicating that no purchase command has been received - method 400 waits at block 410. It will be appreciated that during such periods of waiting, the current metadata in media cache 344 can change responsive to additional media broadcasts being received at player device 120. In such instances, method 400 can start over with the performance of block 405, where processor 200 receives the updated current metadata.

When the determination at block 410 is affirmative (that is, when processor 200 determines that it has received input data representing a purchase command), method 400 proceeds to block 415.

At block 415, processor 200 can be configured to generate and transmit a purchase request in response to the purchase command received at block 410. The purchase request is transmitted, via communications interface 236, over link 108, network 112 and link 132 to server 128. The purchase request includes an identifier of the media to be purchased. The identifier to be included in the purchase request is obtained from current metadata 244 maintained in memory 204. As seen from the performance of blocks 405 and 410, the identifier is therefore an identifier for the media currently being played by player device 120, allowing for the purchase to be effected by mobile electronic device 104 substantially simultaneously with the playing of the media by player device 120. It will now be appreciated that the performance of block 415 can include the transmission of any suitable authentication information to server 128. Authentication information can include a username and password for an account maintained by server 136 and associated with mobile electronic device 104. Other items of authentication information are also contemplated, such as credit card numbers, birthdates and the like. It is contemplated that authentication information can be encrypted prior to transmission to server 128.

Proceeding to block 420, in response to the purchase request transmitted at block 415, and dependent on successful authentication and balance or credit verification at server 128, processor 104 is configured to receive the purchased media from server 128 and store the purchased media in memory 204 at 248. Purchased media 248, which corresponds to the current media being played by player device 120 (or for which playback recently completed), can then be played back by mobile electronic device 104, transmitted to other devices, or both. For example, in some example embodiments, method 400 can proceed to block 425, at which processor 200 is configured to transmit purchased media 248, via communications interface 236, to player device 120. Such performance of block 425 allows player device 120 to play purchased media 248 at a later time, after purchased media 248 no longer corresponds to the current media stored in media cache 344.

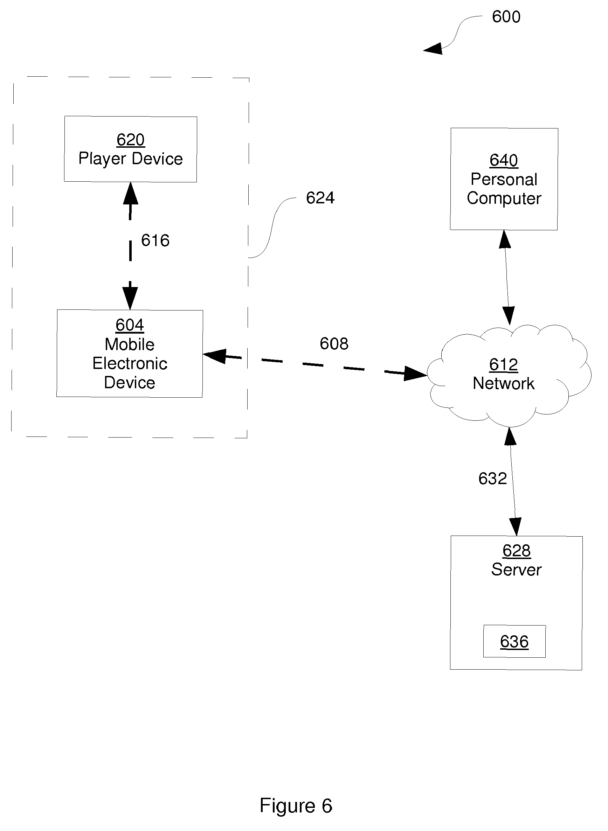

Referring now to Figure 6, a system 600 according to another non-limiting embodiment is depicted. Like elements are identified by like reference numerals in Figure 6, with a leading "6" being used rather than a leading "1 ". Thus, system 600 includes a mobile electronic device 604 connected to a network 612 via a link 608. System 600 also includes a player device 620 connected to mobile electronic device 604 via a link 616, and a server 628 maintaining a store 636 and connected to network 612 via a link 632. The above- mentioned elements of system 600 are as described in connection with their counterparts in system 100. System 600 also includes an additional computing device 640, such as a personal computer. Personal computer 640 can be based on any well known computing environment, and thus includes an enclosure housing a processor and a memory. Personal computer 640 also includes input apparatuses such as a keyboard and a mouse, and output devices such as a display and speakers. Personal computer 640 can be associated with mobile electronic device 604. For example, both personal computer 640 and mobile electronic device 604 can be associated with the same media-purchasing account on server 628.

Referring again to Figure 4, in some embodiments, the purchase request transmitted at block 415 can include one or more identifiers for the device or devices to which the purchased media is to be transmitted. For example, mobile electronic device 604 can transmit a purchase request including identifiers for both mobile electronic device 604 itself and personal computer 604. In other example embodiments, identifiers for the mobile electronic device 604 and the player device 620 are provided. As a result, the purchased media can be transmitted to both devices by server 128. It will now be apparent to those skilled in the art that various device identifiers are contemplated, such as Internet Protocol (IP) addresses, telephone numbers and the like.

Those skilled in the art will appreciate that in some embodiments, the functionality of processor 200 executing application 240 can be implemented using pre-programmed hardware or firmware elements (e.g., application specific integrated circuits (ASICs), electrically erasable programmable read-only memories (EEPROMs), etc.), or other related components.

Persons skilled in the art will appreciate that there are yet more alternative implementations and modifications possible for implementing the embodiments, and that the above implementations and examples are only illustrations of one or more embodiments. The scope, therefore, is only to be limited by the claims appended hereto.

## Claims

1. A method (400) of purchasing media comprising:
receiving metadata (405) at a communications interface (236) of a mobile electronic device (104), the metadata comprising an identifier for media being played by a second device (120);
determining whether input data has been received (410) at the mobile electronic device (104), the input data representing a purchase command; and
when the determination is affirmative, transmitting a purchase request (415) from the mobile electronic device (104) for purchasing the media, the purchase request including the identifier.

2. The method of claim 1, further comprising:
responsive to transmitting the purchase request, receiving the media (420) at the mobile electronic device; and,
storing the media (248) in a memory (204) of the mobile electronic device (104).

3. The method of claim 2, further comprising:
transmitting (425) the media (248) to the second device (120).

4. The method of any of claims 1 to 3, further comprising:
following receipt of the metadata, storing the metadata (244) in a memory (204) of the mobile electronic device (104).

5. The method of claim 4, further comprising:
receiving further metadata; and,
writing the further metadata in the memory (204) in place of the metadata (244).

6. The method of any of claims 1 to 5, wherein the metadata is received from the second device (120).

7. The method of claim 6, wherein the metadata (244) is received automatically.

8. The method of claim 6, further comprising:
prior to receiving the metadata (244), transmitting a metadata request to the second device (120).

9. The method of any of claims 1 to 8, wherein the second device is a satellite radio tuner (120).

10. The method of any of claims 1 to 9, wherein the second device is a digital cable receiver.

11. The method of any of claims 1 to 10, wherein the purchase request comprises at least one identifier for at least one other device (640) associated with the mobile electronic device (104).

12. The method of claim 11, wherein the at least one other device is a personal computer (604).

13. The method of claim 12, wherein the personal computer (604) and the mobile electronic device (104) are associated with the same media-purchasing account.

14. A mobile electronic device (104) configured to perform the method of any one of claims 1-13.

15. A non-transitory computer readable storage medium having computer-readable instructions embodied therein for execution by a processor, the computer-readable instructions implementing the method of any one of claims 1-13.
